Europäisches Patentamt

European Patent Office

Office européen des brevets

(11) Veröffentlichungsnummer: **0 101 894**

**B1**

# (12) EUROPÄISCHE PATENTSCHRIFT

(45) Veröffentlichungstag der Patentschrift:
18.05.88

(21) Anmeldenummer: 83107142.8

(22) Anmeldetag: 21.07.83

(51) Int. Cl.⁴: **H 01 B 1/12**

(54) Verfahren zum Verarbeiten von elektrisch leitfähigen Pyrrol-Polymeren.

(30) Priorität: 27.07.82 DE 3227914

(43) Veröffentlichungstag der Anmeldung:
07.03.84 Patentblatt 84/10

(45) Bekanntmachung des Hinweises auf die Patenterteilung:
18.05.88 Patentblatt 88/20

(84) Benannte Vertragsstaaten:
BE DE FR GB NL

(56) Entgegenhaltungen:
EP-A-0 036 118
EP-A-0 065 358
US-A-3 060 163

(73) Patentinhaber: BASF Aktiengesellschaft, Carl-Bosch- Strasse 38, D-6700 Ludwigshafen (DE)

(72) Erfinder: Naarmann, Herbert, Dr., Haardtblick 15,
D-6719 Wattenheim (DE)
Erfinder: Heckmann, Walter, Dr.,
Geiersbergstrasse 2, D-6940 Weinheim (DE)
Erfinder: Koehler, Gernot, Dr., Berner Weg 32,
D-6700 Ludwigshafen (DE)

EP 0 101 894 B1

## Beschreibung

Die Erfindung betrifft ein Verfahren zum Verarbeiten von elektrisch leitfähigen Pyrrol-Polymeren unter bestimmten, definierten Temperatur- und Druck-Bedingungen.

Aus D.E. Weiss et al, Austr. J. Chem. 16, Seiten 1056, 1076 und 1096 (1963) ist die Pyrolyse von Tetraiodpyrrol bekannt. Hierbei entstehen elektrisch leitfähige Pulver mit Leitfähigkeiten bis $10^{-1}\Omega^{-1}cm^{-1}$. Die hohe Leitfähigkeit ist auf eine Komplexbildung zwischen dem unlöslichen Polypyrrol und dem Iod zurückzuführen.

Nach Arbeiten von A.F. Diaz et al, J.C.S. Chem. Comm. 1979, Seite 635; J.C.S. Chem. Comm. 1979, Seite 854 und ACS Org. Coat. Plast. Chem. 43 (1980) werden bei der anodischen Polymerisation von Pyrrol in Gegenwart von Leitsalzen Filme mit elektrischen Leitfähigkeiten bis zu $10^{2}\Omega^{-1}cm^{-1}$ gebildet. Hierbei handelt es sich um p-leitende Polypyrrole, wobei als Gegenanionen vor allem $BF_4^-$, $AsF_6^-$, $ClO_4^-$ und $HSO_4^-$ genannt werden. Unter definierten Elektrolyse-Bedingungen, insbesondere bei Einhaltung hoher Spannungen und Stromdichten, können bei der elektrochemischen Polymerisation auch teilchenförmige elektrisch leitfähige Pyrrol-Polymere an der Anode abgeschieden werden.

In der US-A-3 660 163 werden elektrochemische Zellen beschrieben, die eine Lithium-Anode und eine Kathode aus einem elektrisch leitfähigen Polymeren, z. B. Polypyrrol und Jod als Gegenanion enthalten. Die Kathode kann durch Verpressen von feinteiligen Polymeren mit Jod erhalten werden. Über die Verarbeitung von filmförmigen elektrisch leitfähigen Polymeren finden sich keine Angaben.

Für viele Anwendungszwecke, beispielsweise zur Herstellung von Elektronik-Bauteilen, elektrischen Schaltern, speziellen Elektroden-Materialien etc., ist es notwendig oder erstrebenswert, die elektrisch leitfähigen Pyrrol-Polymeren durch einen weiteren Verarbeitungsschritt in die gewünschte Anwendungsform zu überführen. Beispielsweise müssen pulverförmige Pyrrol-Polymere für die Anwendung im allgemeinen zu entsprechenden Formkörpern umgearbeitet werden. Im Fall von filmförmigen Pyrrol-Polymeren ist es häufig von Vorteil, diese mit anderen Materialien und Substraten zu beschichten und/oder festhaftend zu verbinden. Wegen der hohen Temperaturbeständigkeit der Pyrrol-Polymeren von über 300° C ohne zu erweichen einerseits bzw. der schweren Löslichkeit der Pyrrol-Polymeren andererseits ist bislang noch kein geeignetes Verfahren zum Verarbeiten von elektrisch leitfähigen Pyrrol-Polymeren bekannt.

Aufgabe der vorliegenden Erfindung ist es, ein Verfahren zum Verarbeiten von elektrisch leitfähigen Pyrrol-Polymeren zu schaffen, welches leicht durchführbar und breit anwendbar ist und die Herstellung von mehrschichtigen Verbundelementen gestattet, wobei man Pyrrol-Polymere in Form eines Filmes oder einer Folie auf flächenförmigen, elektrisch nicht leitenden Substraten als Trägermaterial verpreßt, ohne daß hierbei die elektrische Leitfähigkeit oder andere wesentliche Eigenschaften der Pyrrol-Polymeren beeinträchtigt werden oder verloren gehen.

Es wurde nun überraschend gefunden, daß diese Aufgabe durch die Verarbeitung der elektrisch leitfähigen Pyrrol-Polymeren bei Temperaturen im Bereich von 150 bis 300° C und bei Drucken von mindestens 50 bar gelöst wird.

Gegenstand der Erfindung ist demzufolge ein Verfahren zum Verarbeiten von elektrisch leitfähigen Pyrrol-Polymeren, welches dadurch gekennzeichnet ist, daß man die Pyrrol-Polymeren in Form eines Filmes oder einer Folie auf flächenförmige, elektrisch nicht leitende Substrate als Trägermaterial bei Temperaturen von 150 bis 300° C und bei Drucken von mindestens 50 bar verpreßt.

Obwohl die Pyrrol-Polymere nicht thermoplastisch verarbeitbar sind, hat es sich überraschenderweise gezeigt, daß sie unter den Temperatur- und Druck-Bedingungen des erfindungsgemäßen Verfahrens sowohl miteinander als auch mit anderen Materialien, insbesondere anderen Polymeren, die unter den Verfahrensbedingungen stabil sind, verpreßt und festhaftend verbunden werden können. Es hat sich ferner gezeigt, daß die elektrische Leitfähigkeit der Pyrrol-Polymeren durch das erfindungsgemäße Verfahren nicht beeinträchtigt wird, so daß die mehrschichtigen Verbundelemente eine hohe elektrische Leitfähigkeit besitzen. Bei der erfindungsgemäßen Verarbeitung können sich die elektrisch leitfähigen Pyrrol-Polymere an ihrer äußeren Oberfläche leicht verfärben. Es kann sich hierbei auch eine sehr dünne Oberflächenschicht bilden, die elektrisch nicht leitfähig ist. Es ist noch nicht bekannt, woher diese Verfärbung und Bildung der sehr dünnen nichtleitenden Oberflächenschicht rührt. Hierdurch werden aber die Eigenschaften der erfindungsgemäß verarbeiteten und verpreßten Pyrrol-Polymeren nicht berührt oder beeinträchtigt, d. h., die Pyrrol-Polymeren besitzen auch nach der erfindungsgemäßen Verarbeitung beispielsweise die gleiche elektrische Leitfähigkeit wie vorher. Zur Kontaktierung kann es jedoch notwendig sein, die sich bei der Verarbeitung an der äußeren Oberfläche bildende dünne, elektrisch nicht leitende Schicht beispielsweise durch Abkratzen, Abbürsten oder dergleichen zu entfernen, was ohne Schwierigkeiten und ohne besonderen Aufwand möglich ist.

Unter Pyrrol-Polymeren werden im Rahmen dieser Erfindung sowohl Homo- als auch Copolymere von Pyrrolen ganz allgemein verstanden. Hierzu gehören insbesondere die Polymere des unsubstituierten Pyrrols selber und/oder von substituierten Pyrrolen. Zu den substituierten Pyrrolen gehören insbesondere die N-Alkylpyrrole, die N-Arylpyrrole, die an den C-Atomen monoalkyl- oder dialkylsubstituierten Pyrrole und die an den C-Atomen monohalogen-oder dihalogensubstituierten Pyrrole; die Alkyl-Reste haben dabei im allgemeinen 1 bis 4 C-Atome (z. B. Methyl oder Ethyl), als Arylrest kommt insbesondere der gegebenenfalls substituierte Phenyl-Rest in Betracht und als Halogen insbesondere Chlor. Besondere Bedeutung kommt den Polymeren des unsubstituierten Pyrrols selber zu, insbesondere dem Polypyrrol als solchen. Zum Einsatz in dem erfindungsgemäßen Verfahren eignen sich auch Copolymere der genannten Pyrrole mit anderen Comonomeren, insbesondere anderen 5- und/oder 6-gliedrigen heteroaromatischen Verbindungen, wie z. B. Furan, Thiophen, Thiazol, Oxazol, Thiadiazol, Imidazol, Pyridin, 3,5-Dimethylpyridin, Pyrazin und 3,5-Dimethylpyrazin. Unter diesen Copolymeren haben sich insbesondere die Copolymere aus Pyrrol und Furan, Thiophen, Thiazol und/oder Thiadiazol bewährt.

Die Herstellung der in dem erfindungsgemäßen Verfahren einzusetzenden elektrisch leitfähigen Pyrrol-Polymeren ist als solche bekannt und kann nach den üblichen Methoden vorgenommen werden. Am einfachsten und besten geeignet ist hierzu die elektrochemische Polymerisation, bei der man die Pyrrole sowie gegebenenfalls die anderen Comonomeren in einem polaren organischen Lösungsmittel in Gegenwart eines geeigneten Leitsalzes anodisch oxidiert und dabei polymerisiert. Die Pyrrol-Polymeren scheiden sich dabei an der Anode im allgemeinen in Form eines Filmes ab; bei erhöhter Spannung und/oder Stromdichte können jedoch auch teilchenförmige Pyrrol-Polymere erhalten werden. Die durch elektrochemische Polymerisation hergestellten, elektrisch leitfähigen Pyrrol-Polymere enthalten zumindest teilweise das Anion des bei ihrer Herstellung verwendeten Leitsalzes, wahrscheinlich in komplexgebundener Form. Es handelt sich hierbei somit - ebenso wie bei den nach anderen Methoden hergestellten elektrisch leitfähigen Pyrrol-Polymeren - um p-leitende Systeme. Man kann die erfindungsgemäß einzusetzenden elektrisch leitfähigen Pyrrol-Polymere daher auch als Komplexe oder Salze aus Kationen der Pyrrol-Polymeren und Gegenanionen bezeichnen. Als Gegenanionen in den elektrisch leitfähigen Pyrrol-Polymeren kommen vor allem $BF_4^-$, $AsF_6^-$, $SbF_6^-$, $SbCl_6^-$, $PF_6^-$, $ClO_4^-$, $HSO_4^-$ und $SO_4^{2-}$ in Betracht. Vorteilhaft sind elektrisch leitfähige Pyrrol-Polymere, die als Gegenanion ein Anion von Aromaten mit sauren Gruppen, insbesondere ein Anion von gegebenenfalls mit Alkylgruppen und/oder Nitrogruppen substituierten aromatischen Sulfonsäuren, wie z. B. das Benzolsulfonat- oder das Tosylat-Anion, enthalten.

Bei dem erfindungsgemäßen Verfahren können die elektrisch leitfähigen Pyrrol-Polymere sowohl in Form von Filmen oder Folien eingesetzt und verarbeitet werden.

Mit besonderem Vorteil lassen sich in dem erfindungsgemäßen Verfahren Filme oder Folien aus den elektrisch leitfähigen Pyrrol-Polymeren einsetzen, die sowohl untereinander als auch insbesondere mit anderen Stoffen festhaftend verbunden werden können. Die Filme oder Folien an den Pyrrol-Polymeren haben dabei üblicherweise eine Dicke von ca. 20 bis 500 μm. Bevorzugt werden die Filme oder Folien der elektrisch leitfähigen Pyrrol-Polymeren mit flächenförmigen, insbesondere elektrisch nicht leitenden Substraten als Trägermaterialien verpreßt und verbunden. Als derartige flächenförmige Substrate kommen vorzugsweise Filme oder Folien aus Polymeren, die unter den erfindungsgemäßen Verfahrensbedingungen stabil sind, in Betracht. Beispiele für solche Polymeren sind - wie oben erwähnt - Polyethylen, Polypropylen, Polystyrol, Polyurethan, Polyester und Polyamide. Das Verpressen der Pyrrol-Polymer-Filme bzw. -Folien mit den flächenförmigen Substraten kann dabei derart erfolgen, daß das oder die flächenförmigen Substrate und der oder die Pyrrol-Polymer-Filme bzw. -Folien in der gewünschten Reihenfolge übereinandergeschichtet und dann zwischen zwei Metallplatten, beispielsweise aus Edelstahl oder Nickel, eingebracht werden. Die für das Verbinden der einzelnen Schichten notwendige Temperatur kann dann über die Metallplatten unter gleichzeitiger Anwendung des erforderlichen Druckes, beispielsweise in einer Presse, eingebracht werden.

Ganz allgemein werden die elektrisch leitfähigen Pyrrol-Polymeren bei der Verarbeitung in dem erfindungsgemäßen Verfahren den Druck- und Temperatur-Bedingungen so lange ausgesetzt, bis eine hinreichend feste Verbindung zwischen den Pyrrol-Polymeren untereinander oder mit den anderen Stoffen bzw. Substraten eingetreten ist. Im allgemeinen sind hierfür Zeiten von 2 bis 10 Minuten hinreichend. In der Regel werden die Verarbeitungszeiten umso kürzer gehalten werden können, je höher die angewandte Temperatur und/oder der angewandte Druck ist.

Auch wenn das erfindungsgemäße Verfahren das Verarbeiten von elektrisch leitfähigen Pyrrol-Polymeren ganz allgemein ermöglicht, so ist ein besonderer Vorteil darin zu sehen, daß es die Herstellung von mehrschichtigen Verbundelementen verschiedenster Arten und dem jeweils gewünschten Anwendungszweck entsprechend in einfacher Weise gestattet. Bevorzugte, mit dem erfindungsgemäßen Verfahren ungestellte mehrschichtige Verbundelemente bestehen dabei aus mindestens einer Schicht aus einem elektrisch leitfähigen Pyrrol-Polymeren und mindestens einer damit festhaftend verbundenen Schicht aus einem elektrisch nicht leitfähigen Material, insbesondere einem Polymeren der oben als Substrat-Material genannten Art. In diesen Mehrschichtenelementen haben die Schichten aus den elektrisch leitfähigen Pyrrol-Polymeren im allgemeinen eine Schichtstärke im Bereich von 20 bis 500 μm; sie kann jedoch auch darüber oder darunter liegen.

Neben der einfachsten Ausführungsform, in der beispielsweise auf einem Polymerfilm oder einer Polymerfolie als Substrat eine Schicht aus den elektrisch leitfähigen Pyrrol-Polymeren aufgebracht wird, können auch 3, 4 oder mehr Schichten nach dem erfindungsgemäßen Verfahren verbunden werden. Beispielsweise ist es möglich, auf einen Polymerfilm oder eine Polymerfolie als Substrat beidseitig Schichten aus elektrisch leitfähigen Pyrrol-Polymeren aufzubringen, wobei für die einzelnen Schichten gegebenenfalls verschiedene Pyrrol-Polymere, unter Umständen mit unterschiedlicher elektrischer Leitfähigkeit oder sonstigen unterschiedlichen Eigenschaften, verwendet werden können. Man erhält so ein Mehrschichtenelement mit einer elektrisch nicht leitenden, isolierend wirkenden Mittelschicht und zwei außen liegenden Schichten mit hoher elektrischer Leitfähigkeit. Derartige Mehrschichtenelemente sind beispielsweise als Elektrodenmaterialien sehr geeignet und finden besonderes Interesse für den Einsatz in Speicherelementen. In einer anderen Ausgestaltungsform können die nach dem erfindungsgemäßen Verfahren hergestellten mehrschichtigen Verbundelemente eine mittlere Schicht aus einem elektrisch leitfähigen Pyrrol-Polymeren enthalten, auf die beidseitig Schichten aus elektrisch nicht leitenden Materialien, insbesondere den hierfür genannten Polymeren, fest haftend aufgebracht sind. Man erhält so ein Mehrschichtenelement mit einer gegebenfalls bandförmig zu gestaltenden mittleren Schicht aus einem elektrisch hochleitfähigen, metallähnlichen Material, die von elektrisch nicht leitenden, isolierend wirkenden Schichten umgeben ist. Dies gilt insbesondere dann, wenn die beiden Außenschichten aus den elektrisch nicht leitenden Polymeren breiter sind als die mittlere Schicht aus den Pyrrol-Polymeren, so daß beim Verpressen der einzelnen Schichten zur Herstellung der Mehrschichtenelemente die elektrisch nicht leitenden Polymeren in den Außenbereichen direkt miteinander verbunden werden. Derartige Verbundelemente mit einer mittleren, allseitig von isolierenden Materialien umgebenen Schicht mit metallischer Leitfähigkeit eignen sich beispielsweise für den Stromtransport als Flachkabel oder als Abschirmmaterialien.

Die nach dem erfindungsgemäßen Verfahren hergestellten Produkte finden ganz allgemein Anwendung in den für die elektrisch leitfähigen Pyrrol-Polymeren bekannten Einsatzgebieten und darüber hinaus überall dort, wo elektrisch leitfähige Schichten oder Produkte mit metallähnlicher Leitfähigkeit gefordert werden. Hierzu gehören beispielsweise Elektroden, Abschirmungsmaterialien, vorzugsweise für langwellige Strahlung wie Radarstrahlung, und Membranen, speziell Ionenmembranen.

Die Erfindung wird durch die nachfolgenden Beispiele näher erläutert. Die in den Beispielen angegebenen Prozente beziehen sich auf das Gewicht.

**Beispiel 1**

Zwischen zwei Polypyrrol-Filme (jeweils 50 μm stark; Ausgangsleitfähigkeiten: $50\Omega^{-1}cm^{-1}$) wurde eine Polyesterfolie gelegt und die Schichten innerhalb von 2 Minuten bei 50 bar Druck und 170° C in einer Edelstahl-Presse verpreßt. Die Schichten der Polymeren waren nach dem Verpressen zu einem einheitlichen Mehrschichtenelement fest haftend verbunden, welches ohne Schwierigkeiten aus der Presse entnommen werden konnte. Zur Kontaktierung wurden die Oberflächen der Polypyrrol-Schichten leicht abgebürstet; die elektrische Leitfähigkeit dieser Schichten lag unverändert bei $50\Omega^{-1}cm^{-1}$. Die Reißfestigkeit des hergestellten Mehrschichtenelementes lag mit Wert > 200 $N/cm^2$ deutlich über den Ausgangswerten für die Polypyrrol-Filme (ca. 60 $N/cm^2$).

**Beispiel 2**

Es wurde wie in Beispiel 1 gearbeitet, anstelle der Polypyrrol-Filme diesmal jedoch Filme aus einem Pyrrol/Furan-Copolymeren (50 % : 50 %) eingesetzt. Die elektrische Leitfähigkeit der Pyrrol/Furan-Copolymeren betrug vor und nach dem Verpressen $45\Omega^{-1}cm^{-1}$. Die Reißfestigkeit des Mehrschichtenelementes lag ebenfalls über 200 $N/cm^2$.

**Beispiel 3**

Es wurde wie in Beispiel 1 gearbeitet, diesmal jedoch ein Copolymer-Film aus 35 % Pyrrol und 65 % Thiophen eingesetzt. Die Pyrrol-Copolymer-Schichten des Mehrschichtenelements hatten eine Leitfähigkeit von $40\Omega^{-1}cm^{-1}$ (wie vor dem Verpressen); die Reißfestigkeit des Mehrschichtenelementes betrug > 200 $N/cm^2$.

**Beispiel 4**

Es wurde wie in Beispiel 1 gearbeitet, diesmal jedoch anstelle der Polypyrrol-Filme Filme von Copolymeren aus 20 % Pyrrol und 80 % 3,5-Dimethylpyrazin eingesetzt. Es wurden Ergebnisse wie in Beispiel 3 erhalten.

## Beispiel 5

Es wurde gemäß der Arbeitsweise von Beispiel 1 ein Vielschichtenelement aus wechselweisen Schichten von Polypyrrol und Polyestervlies aufgebaut. Das Element bestand aus 7 Polypyrrol-Schichten und 6 Schichten des Polyestervlieses. Nach dem Preßvorgang (10 Minuten bei 200°C und 75 bar) resultierte ein Verbundelement mit Schichten einer Leitfähigkeit von ca 60$\Omega^{-1}$cm$^{-1}$ und einer Reißfestigkeit >300 N/cm$^2$.

## Beispiel 6

Auf einen flächig ausgebildeten Polyurethanschaumstoff wurden beidseitig bei 150°C und 50 bar zwei 50 µm dicke Polypyrrol-Filme aufgepreßt. Der so modifizierte Polyurethanschaumstoff war somit auf Ober- und Unterseite fest mit einer elektrisch hochleitfähigen Oberflächenvergütung versehen.

## Beispiel 7

In einer geschlossenen Form (10 cm x 10 cm x 5 cm) wurde expandierbares Polystyrol unter üblichen Bedingungen geschäumt. Die Form war dabei an der Ober- und Unterseite mit je einem Polypyrrol-Film ausgekleidet, der nach dem Expandiervorgang fest an dem geschäumten Polystyrol haftete.

## Beispiel 8

Ein 30 µm dicker Polypyrrol-Film wurde bei 150°C und 50 bar innerhalb von 10 Minuten auf einen Polyethylenfilm kaschiert. Die elektrische Leitfähigkeit des Polypyrrol-Films betrug vor und nach dem Kaschieren 50$\Omega^{-1}$cm$^{-1}$.

## Beispiel 9

Es wurde wie in Beispiel 1 gearbeitet, anstelle des Polyesters als Substrat diesmal jedoch eine Polyamid 6,6-Folie verwendet. Man erhielt auf dem Polyamid festhaftende Polypyrrol-Filme mit Leitfähigkeiten von ca. 50$\Omega^{-1}$cm$^{-1}$.

## Patentansprüche

1. Verfahren zum Verarbeiten von elektrisch leitfähigen Pyrrol-Polymeren, <u>dadurch gekennzeichnet</u>, daß man die Pyrrol-Polymeren in Form eines Filmes oder einer Folie auf flächenförmige, elektrisch nicht leitende Substrate als Trägermaterial bei Temperaturen von 150 bis 300°C und bei Drucken von mindestens 50 bar verpreßt.

2. Verfahren nach Anspruch 1, <u>dadurch gekennzeichnet</u>, daß das Trägermaterial ein Film oder eine Folie aus einem Polymeren ist.

3. Verfahren nach Anspruch 1, <u>dadurch gekennzeichnet</u>, daß man mindestens eine Schicht aus elektrisch leitfähigen Pyrrol-Polymeren mit mindestens einer Schicht aus einem elektrisch nicht leitfähigem Material haftfest verbindet.

4. Verfahren nach Anspruch 1, <u>dadurch gekennzeichnet</u>, daß man eine Schicht aus elektrisch leitfähigen Pyrrol-Polymeren beidseitig mit Schichten aus elektrisch nicht leitfähigem Material verbindet.

5. Verfahren nach Anspruch 1, <u>dadurch gekennzeichnet</u>, daß man eine Schicht aus elektrisch nicht leitfähigem Material beidseitig mit Schichten aus elektrisch leitfähigen Pyrrol-Polymeren verbindet.

6. Verfahren nach den Ansprüchen 3 bis 5, <u>dadurch gekennzeichnet</u>, daß das elektrisch nicht leitfähige Material ein Polymeres ist.

7. Verfahren nach einem der Ansprüche 1 bis 6, <u>dadurch gekennzeichnet</u>, daß man die Pyrrol-Polymeren bei Drucken bis zu 250 bar verpreßt.

8. Verfahren nach Anspruch 1 bis 7, <u>dadurch gekennzeichnet</u>, daß Homopolymere des unsubstituierten Pyrrols eingesetzt werden.

9. Verfahren nach Anspruch 1 bis 7, <u>dadurch gekennzeichnet</u>, daß Copolymere aus unsubstituiertem Pyrrol und substituierten Pyrrolen eingesetzt werden.

10. Verfahren nach einem der Ansprüche 1 bis 7, <u>dadurch gekennzeichnet</u>, daß Copolymere aus Pyrrolen und anderen Heteroaromaten eingesetzt werden.

11. Verfahren nach Anspruch 1 bis 7, <u>dadurch gekennzeichnet</u>, daß als Heteroaromaten Furan, Thiophen, Thiazol, Oxazol, Thiadiazol, Imidazol, Pyridin, 3 5-Dimethylpyridin, Pyrazin und 3,5-Dimethylpyrazin eingesetzt werden.

## Claims

1. A method of processing an electrically conductive pyrrole polymer, wherein the pyrrole polymer in the form of a film or sheet is compression-bonded to a sheet-like, electrically non-conductive substrate as the base at from 150 to 300°C and under a pressure of not less then 50 bar.

2. A method as claimed in claim 1, wherein the base is a film or sheet of a polymer.

3. A method as claimed in claim 1, wherein at least one layer of an electrically conductive pyrrole polymer is firmly bonded to at least one layer of an electrically non-conductive material.

4. A method as claimed in claim 1, wherein a layer of an electrically non-conductive material is bonded to each side of a layer of an electrically conductive pyrrole polymer.

5. A method as claimed in claim 1, wherein a layer of an electrically conductive pyrrole polymer is bonded to each side of a layer of an electrically non-conductive material.

6. A method as claimed in claims 3 to 5, wherein the electrically non-conductive material is a polymer.

7. A method as claimed in any of claims 1 to 6, wherein the pyrrole polymer is conpression-bonded under a pressure of not more than 250 bar.

8. A method as claimed in claims 1 to 7, wherein a homopolymer of unsubstituted pyrrole is used.

9. A method as claimed in claims 1 to 7, wherein a copolymer of unsubstituted pyrrole and substituted pyrroles is used.

10. A method as claimed in any of claims 1 to 7, wherein a copolymer of pyrroles and other heteroaromatics is used.

11. A method as claimed in claims 1 to 7, wherein furan, thiophene, thiazole, oxazole, thiadiazole, imidazole, pyridine, 3,5-dimethylpyridine, pyrazine and 3,5-dimethylpyrazine are used as heteroaromatics.

**Revendications**

1. Procédé pour la transformation de polymères de pyrrole conducteurs électriques, caractérisé en ce que les polymères de pyrrole sont soumis, sous la forme d'un film ou d'une feuille, à un pressage sur un substrat plat, non conducteur électrique, comme matériau de support, à des températures de 150 à 300°C et sous une pression d'au moins 50 bars.

2. Procédé selon la revendication 1, caractérisé en ce que le matériau de support est un film ou une feuille constituée d'un polymère.

3. Procédé selon la revendication 1, caractérisé en ce qu'on relie, de façon fermement adhérente, au moins une couche constituée d'un polymère de pyrrole conducteur électrique à au moins une couché d'un matériau non conducteur éléctrique.

4. Procédé selon la revendication 1, caractérisé en ce qu'on relie au moins une couche constituée d'un polymère de pyrrole conducteur électrique à des couches de matériau non conducteurs électriques.

5. Procédé selon la revendication 1, caractérisé en ce qu'on relie une couche de matériau non conducteur électrique à des couches en polymère de pyrrole conducteur électrique.

6. Procédé selon les revendications 3 à 5, caractérisé en ce que le matériau non conducteur électrique est un polymère.

7. Procédé selon l'une quelconque des revendications 1 à 5, caractérisé en ce qu'on soumet le polymère de pyrrole à un pressage sous une pression allant jusqu'à 250 bars.

8. Procédé selon les revendications 1 à 7, caractérisé en ce que l'on met en oeuvre des homopolymères de pyrrole non substitué.

9. Procédé selon les revendications 1 à 7, caractérisé en ce que l'on met en oeuvre des copolymères de pyrrole non substitue et de pyrrole substitué.

10. Procédé selon les revendications 1 à 7, caractérisé en ce que l'on met en oeuvre des copolymères du pyrrole et d'autres composés hétéroaromatiques.

11. Procédé selon les revendications 1 à 7, caractérisé en ce que comme composés hétéroaromatiques, on met en oeuvre le furanne, le thiophène, le thiazole, l'oxazole, le thiadiazole, l'imidazole, la pyridine, la 3,5-diméthylpyridine, la pyrazine et la 3,5-diméthylpyrazine.